# EUROPÄISCHE PATENTSCHRIFT

(11) **EP 4 217 812 B1**
(45) Veröffentlichungstag und Bekanntmachung des Hinweises auf die Patenterteilung: **03.07.2024**
(21) Anmeldenummer: 21783184.1
(22) Anmeldetag: 23.09.2021
(51) Int. Cl.: G05D 1/244, G05D 1/646, G05D 1/661, G05D 1/693, B66F 9/06, G05D 105/28, G05D 107/70, G05D 109/10, G05D 111/30

(54) **FAHRERLOSES TRANSPORTSYSTEM**
DRIVERLESS TRANSPORT SYSTEM
SYSTÈME DE TRANSPORT SANS CONDUCTEUR

(30) Priorität: 25.09.2020 DE 102020125118
(43) Veröffentlichungstag der Anmeldung: 02.08.2023
(73) Patentinhaber: SSI Schäfer Automation GmbH (DE), 97232 Giebelstadt (DE)
(72) Erfinder: CHONG, Dennis, 28279 Bremen (DE); KLEEDÖRFER, Ralf, 97828 Marktheidenfeld (DE)
(74) Vertreter: Witte, Weller & Partner Patentanwälte mbB
(86) Internationale Anmeldenummer: PCT/EP2021/076144
(87) Internationale Veröffentlichungsnummer: WO 2022/063870

(56) Entgegenhaltungen:
- WO-A1-2019/123660
- DE-A1-102014 111 396
- US-A- 5 267 173
- US-A- 5 329 449
- US-A1- 2003 234 325

## Beschreibung

Die vorliegende Offenbarung betrifft ein fahrerloses Transportsystem mit einer Flotte von mehreren fahrerlosen Transportfahrzeugen, die zwangsgeführt entlang eines Fahrkurses fahren.

Leitsteuerungen in herkömmlichen fahrerlosen Transportsystemen (FTS) sorgen dafür, dass jedes Fahrzeug zentral und automatisiert einen Fahrauftrag zugewiesen bekommt. Ein Fahrauftrag wird mindestens durch einen Zielpunkt innerhalb eines Fahrkurses definiert. Eine Zielvergabe erfolgt üblicherweise durch eine Fahrauftragsabwicklung (Disposition von Fahraufträgen), die in die Leitsteuerung integriert ist oder eigenständig implementiert sein kann. Der Fahrauftrag kann optional auch einen Startpunkt umfassen. Ein herkömmlicher Fahrauftrag kann ferner alle navigationswesentlichen Abzweigungspunkte zwischen den Start- und Zielpunkten umfassen, wobei in diesem Fall eine Karte des Fahrkurses in der Leitsteuerung hinterlegt ist und die Navigation bzw. Wegfindung zentral durch die Leitsteuerung erfolgt. Die herkömmliche Leitsteuerung bestimmt also den Weg durch den Fahrkurs hindurch (vorab und/oder dynamisch) vom Start bis zum Ziel.

Optional kann die Karte (auch) im herkömmlichen Fahrzeug hinterlegt sein. Der Fahrauftrag umfasst in diesem Fall im Wesentlichen den Zielpunkt, und ggf. einen oder mehrere Zwischenpunkte, wobei das Fahrzeug seinen Weg durch den Fahrkurs frei basierend auf der im Fahrzeug hinterlegten Karte bestimmen darf. Das Fahrzeug verfügt in diesem Fall über eine entsprechende "Intelligenz", d.h. das Fahrzeug ist mit einer entsprechenden Datenverarbeitungseinrichtung (Mikrocontroller, Rechner, etc.) ausgestattet. Die Navigation bzw. Wegfindung erfolgt in diesem Fall dezentral.

Unabhängig davon, ob die Navigation zentral oder dezentral erfolgt, steht jedes Fahrzeug herkömmlicherweise über einen Kommunikationskanal nahezu kontinuierlich mit der Leitsteuerung in Verbindung, um zumindest das Fahrziel sowie Anweisungen für die Regelung des Verkehrs der Fahrzeuge (Verkehrsregelung bzw. -kontrolle) untereinander auszutauschen. Zur Verkehrsregelung kann die Leitsteuerung spezifische Fahraufträge, die spezifischen Fahrzeugen zugewiesen sind, priorisieren. Dies bedeutet z.B., dass ein spezielles Fahrzeug immer Vorfahrt vor allen anderen Fahrzeugen haben kann. Erkennt die Leitsteuerung aus den aktuellen (Fahrzeug-) Daten (Position, Auftrag, Geschwindigkeit, etc.), dass eine Kollision, eine Verklemmung oder Stauung unmittelbar bevorsteht, regelt die Leitsteuerung den Verkehr unter Berücksichtigung eventueller Priorisierungen so, dass keine Kollision, Verklemmung oder Stauung stattfindet.

Herkömmliche Leitsteuerungen kommunizieren zu diesem Zwecke oft über ein (Computer-) Netzwerk, z.B. WLAN, mit allen FTF der Flotte.

Das Dokument EP 3 180 275 B1, zu dessen Patentfamilie auch die DE 10 2014 111 396 A1 gehört, beschreibt eine Flotte von Fahrzeugen, die von einer Leitsteuerung der oben genannten Art navigiert wird. Die Leitsteuerung ist in diesem Dokument als "Flottenmanager" bezeichnet und die oben erwähnte Fahrauftragsabwicklung wird von einem (separaten) Materialflussrechner (MFR) an den Flottenmanager kommuniziert. Die Karte ist auch in den Fahrzeugen hinterlegt. Außerdem beschreibt die EP 3 180 275 B1 einen herkömmlichen Konfigurationsvorgang sowie die Kommunikation zwischen den Fahrzeugen und dem Flottenmanager und die ausgetauschten Daten.

Unter dem Begriff "Flotte" ist generell eine Vielzahl von Fahrzeugen zu verstehen. Ein einzelnes Fahrzeug kann keine Flotte bilden. Die Fahrzeuge müssen zu diesem Zweck vorab konfiguriert werden, d.h. jedes Fahrzeug verfügt über eine individuelle Kennung. Die Leitsteuerung kann dann jedes Fahrzeug spezifisch ansprechen und verfolgen. Die Verfolgung betrifft sowohl den Fahrauftrag als auch eine (aktuelle) Position des Fahrzeugs im Fahrkurs. Über die Position, die vom Fahrzeug an die Leitsteuerung zurückgemeldet wird, kann die Verkehrskontrolle implementiert werden.

Befinden sich zwei Fahrzeuge z.B. auf einem Kollisionskurs, so interveniert die Leitsteuerung, indem eines der Fahrzeuge verzögert oder angehalten wird, um die sich anbahnende Kollision zu verhindern. Dies erfordert eine Positionsübermittelung für die Fahrzeuge in nahezu Echtzeit. Die herkömmliche Positionsbestimmung kann wiederum (zentral) in der Leitsteuerung und/oder (dezentral) in den Fahrzeugen selbst durchgeführt werden.

Die Verkehrskontrolle durch die Leitsteuerung erfordert viel Kommunikation zwischen den Fahrzeugen und der Leitsteuerung. Die Arbeitslast der Leitsteuerung ist hoch. Die Verkehrskontrolle ist komplex, da sie insbesondere in Echtzeit für jedes Fahrzeug durch die Leitsteuerung geregelt wird.

Die Leitsteuerung muss vorhanden sein, was eine Systemkomplexität und die Kosten erhöht. Diese Nachteile haben z.B. viele Betreiber von kleineren Kommissionieranlagen und Produktionsanlagen, die insbesondere manuell betrieben wurden, davon abgehalten, den Materialfluss durch ein FTS zu automatisieren. Der Systembetreiber konnte das FTS nicht ohne fremde Hilfe implementieren. Der Fahrkurs muss vom FTS-Hersteller geplant und verlegt werden. Dies gilt auch für virtuelle Spuren, die z.B. unter Verwendung eines Magnetrasters im Boden, von Reflektoren an Wänden oder einer laserbasierten Konturenerfassung (SLAM) bestimmt werden. Die Leitsteuerung und die Fahrzeuge müssen durch den FTS-Hersteller konfiguriert werden. Die Leitsteuerung erfordert permanente Datenverbindungen zu den Fahrzeugen, die über ein umfangreiches System von festen Leitungen oder ein Funksystem (z.B. WLAN) implementiert werden. Dies erhöht die Kosten zusätzlich und verhindert, dass Systembetreiber den Materialfluss ohne fremde Hilfe durch ein FTS automatisieren.

Das Dokument DE 691 14 945 T2 betrifft ein Fahrzeugsteuersystem mit mehrzweigen Spuren.

Das Dokument DE 101 62 117 A1 betrifft ein dezentrales System zur vollautomatischen Durchführung von Transportdienstleistungen.

Die Dokumente WO 2019/123660 A1 und US 2020/393849 A1 betreffen ein automatisch geführtes Fahrzeug und ein Steuersystem dafür.

Das Dokument US 2003/234325 A1 betrifft ein Stationssteuersystem für ein fahrerloses Fahrzeug.

Das Dokument US 5 329 449 A betrifft ein Fahrzeugsteuersystem für eine Spur mit mehreren Abzweigungen.

Das Dokument US 5 267 173 A betrifft ein Wagenfahrsteuersystem.

Das Dokument US 2015/140668 A1 betrifft ein kontaktloses optisches Kodierschema für einen intelligenten Automationspuck.

Das Dokument US 6 049 745 A betrifft ein Navigationssystem für ein automatisch geführtes Fahrzeug.

Es ist daher eine Aufgabe, ein FTS bereitzustellen, das die oben beschriebenen Nachteile überwindet. Insbesondere soll das FTS vom Systembetreiber selbst installiert werden können. Auf eine Leitsteuerung soll verzichtet werden, ohne jedoch auf eine sichere Verkehrskontrolle zu verzichten.

Diese Aufgabe wird gelöst durch ein fahrerloses Transportsystem, FTS, gemäß Anspruch 1.

Die Verkehrskontrolle innerhalb des FTS erfolgt durch eine direkte Kommunikation zwischen den FTF. Dies bedeutet, dass keine interagierende Leitsteuerung dazwischen geschaltet ist, die z.B. FTF-spezifisch Fahraufträge priorisiert oder FTF-spezifisch Fahraufträge (Fahrziele) verteilt. Eine direkte Kommunikation kann z.B. auch über WLAN erfolgen, in dem keine interagierende Leitsteuerung dazwischengeschaltet ist, wobei jedoch vermittelnde Einheiten (z.B. ein Accesspoint) dazwischengeschaltet sein dürfen. Direkt bedeutet also insbesondere leitsteuerungsfrei. Leitsteuerungsfrei bedeutet, dass das FTS keine Leitsteuerung umfasst.

Die FTF regeln den Verkehr selbstständig, indem sie stationsspezifisch Vorfahrtsregeln direkt untereinander kommunizieren. Die Kommunikation erfolgt generell FTF-unspezifisch, d.h. die FTF müssen über keine individualisierende Kennung verfügen, die zur Adressierung der FTF übertragen wird.

Das gleiche gilt für eine Fahrzielvergabe. Bei einer Fahrzielvergabe kann ein FTF ein neues Fahrziel z.B. von einem (Stations-)Terminal zugewiesen bekommen. Auch hier erfolgt die Kommunikation direkt und FTF-unspezifisch im oben genannten Sinne.

Die Komplexität des FTS verringert sich, weil die Leitsteuerung wegfällt. Die Arbeitslast zur Bearbeitung von Daten, die für die Verkehrskontrolle relevant sind, verringert sich.

Das FTS der vorliegenden Offenbarung kann von den Systembetreibern selbst in Betrieb genommen werden. Eine Initialkonfiguration der Leitsteuerung (z.B. Hinterlegung der Topologie des Fahrkurses) und der FTF (z.B. Vergabe eindeutiger FTF-Kennungen) entfällt. Die FTF müssen für eine Verkehrskontrolle und Fahrzielvergabe nicht spezifisch angesprochen werden. Die FTF müssen sich insbesondere nicht untereinander (eindeutig) erkennen können. Ein übereinstimmender Stationsidentifikator reicht aus, um eine Interaktion, insbesondere eine Vorfahrtsregelung, zwischen den FTF zu implementieren.

Der Stationsidentifikator ist räumlich nur begrenzt gültig bzw. wirksam, so dass FTF, die sich außerhalb des Gültigkeitsbereichs einer jeweiligen Station befindet, trotz eines möglichen Empfangs nicht auf diese Kommunikationssignale reagieren, weil die FTF basierend auf der Information aus der zuletzt ausgelesenen Markierung wissen, dass sie sich nicht mehr oder noch nicht innerhalb des Bereichs der kommunizierenden Einheit (FTF oder Terminal) befinden.

Ein Tracking der FTF innerhalb des FTS zur Verkehrskontrolle und Auftragsabwicklung entfällt.

Das FTF der vorliegenden Offenbarung ist geeignet, einen Materialfluss in existierenden Kommissionieranlagen oder Produktionsanlagen nachträglich zu automatisieren, wobei die Implementierung vorzugsweise durch den Systembetreiber selbst erfolgt.

Das FTS der vorliegenden Offenbarung ist vorzugsweise nach einem Baukastenprinzip aufgebaut, so dass ein Fahrkurs von ungeschulten Personen errichtet werden kann.

Vorzugsweise ist die Steuereinheit ferner eingerichtet ist: eine Interaktion, insbesondere eine Vorfahrtsregelung, zwischen dem jeweiligen FTF und einem anderen der FTF nur zu veranlassen, wenn eine vom jeweiligen FTF aus einer zuletzt ausgelesenen Markierung umfasste Information mit einem der Stationsidentifikatoren verknüpft ist, der identisch zu einem Stationsidentifikator ist, den das jeweilige FTF von dem anderen FTF zuletzt empfangen hat, und eine Interaktion, insbesondere eine Vergabe eines neuen Fahrziels, zwischen dem jeweiligen FTF und einem der Terminals nur zu veranlassen, wenn eine vom jeweiligen FTF aus einer zuletzt ausgelesenen Markierung umfasste Information mit einem der Stationsidentifikatoren verknüpft ist, der identisch zu einem Stationsidentifikator ist, den das jeweilige FTF von dem einen der Terminals zuletzt empfangen hat.

Insbesondere umfassen die Markierungen Verkehrskontrollmarkierungen, wobei jede der Verkehrskontrollmarkierungen eine stationsspezifische Information über eine Vorfahrtsregelung im Bereich der jeweils zugeordneten Station, insbesondere an einem nächsten stromabwärts gelegenen Zusammenführungspunkt, umfasst, und die Steuereinheit ferner eingerichtet ist, wenn die zuletzt ausgelesene Markierung eine der Verkehrskontrollmarkierungen ist, eine Fortsetzung einer Fahrt des jeweiligen FTF ohne einen Stopp zu veranlassen, wenn die Information aus der zuletzt ausgelesenen Markierung ein Vorfahrthaben darstellt, und einen Stopp der Fahrt zu veranlassen, wenn die Information aus der zuletzt ausgelesenen Verkehrskontrollmarkierung ein Vorfahrtachten darstellt und wenn eine Information von einem anderen der FTF empfangen wird, die ein Vorfahrthaben darstellt und die mit dem identischen Stationsidentifikator wie die Information aus der zuletzt ausgelesenen Verkehrskontrollmarkierung verknüpft ist.

Außerdem kann das andere FTF eingerichtet sein, das stationsspezifische Kommunikationssignal, das von dem einen FTF ausgesendet wird, zu empfangen und die Vorfahrt zu gewähren oder zu achten, wenn die zuletzt von einem anderen FTF ausgelesene Verkehrskontrollmarkierung der gleichen Station zugeordnet ist.

Eine Kommunikation zwischen den FTF des FTS erfolgt also immer stationsspezifisch. Die FTF interagieren nur miteinander, wenn die kommunizierten Informationen der gleichen Station zugeordnet sind. Dies ermöglicht es, unterschiedliche Stationen räumlich eng zueinander anzuordnen, so dass die FTF innerhalb der einen Station nicht durch eine Kommunikation von anderen FTF gestört werden, die in der örtlich nahe angeordneten benachbarten Station agieren.

Wie oben bereits erwähnt, wird eine Verkehrskontrolle innerhalb des FTF ausschließlich durch die FTF selbst geregelt, indem die FTF mittels der jeweiligen Kommunikationseinheit direkt miteinander kommunizieren und eine Vorfahrtsregelung, die an einer aktuellen Position des jeweiligen FTF gültig ist, gemäß den Vorfahrtskontrollregeln umsetzen.

Ferner kann jedes der FTF einen Datenspeicher aufweist, wo Verkehrskontrollregeln, und insbesondere Navigationsregeln, dauerhaft hinterlegt sind, die für alle der FTF gleich sind.

Auch ist es bevorzugt, die Kommunikationseinheit, vorzugsweise ausschließlich, zur drahtlosen Kurzdistanzkommunikation einzurichten.

Die Installation eines "globalen" Kommunikationsnetzwerks, das flächendeckend innerhalb der Anlage des Systembetreibers funktioniert, wird nicht benötigt. Eine nachträgliche Installation eines derartigen globalen Kommunikationsnetzwerks ist oft nicht möglich, weil es immer netzfreie Räume geben wird. Der Austausch von Informationen, die für die Verkehrskontrolle relevant sind, erfolgt ausschließlich über die FTF selbst. Die Reichweiten der Kommunikationseinheiten der FTF sind kurz, weil nur solche der FTF miteinander kommunizieren können müssen, die so nahe zueinander sind, dass sie miteinander kollidieren können.

Ein Energieverbrauch verringert sich, weil für die Kurzdistanzkommunikation schwächere Kommunikationseinheiten (Sender/Empfänger) eingesetzt werden können.

Eine FTF-spezifische Konfiguration der Kommunikation bzw. des Kommunikationsnetzwerks entfällt, wie oben erwähnt.

Weiter ist es von Vorteil, wenn die Markierungen ferner stationsspezifische Navigationsmarkierungen umfassen, die jeweils eine Information über einen nächsten stromabwärts gelegenen Abzweigungspunkt umfassen, wobei die Information über den nächsten stromabwärts gelegenen Abzweigungspunkt insbesondere eine Anzahl und Lagen bzw. Orientierungen von abzweigenden Spuren, eine Lage der Spur der Hauptstrecke und/oder einen Stationsidentifikator angibt.

Die Markierungen der vorliegenden Offenbarung werden also nicht nur zur Verkehrskontrolle, sondern auch zur Navigation (Wegfindung) eingesetzt. Sowohl die Verkehrskontrolle als auch die Navigationskontrolle erfolgt auf Basis von Regeln, die für alle FTF gleich sind. Die Unterscheidung erfolgt basierend auf dem jeweils mit der Information verknüpften Stationsidentifikator. Eine Interaktion zwischen den FTF erfolgt nur dann, wenn die FTF Informationen mit dem gleichen Stationsidentifikator aktuell bearbeiten bzw. verarbeiten.

Weiter ist es bevorzugt, die Steuereinheit so einzurichten, dass, wenn die zuletzt ausgelesene Markierung eine der Navigationsmarkierungen ist, basierend auf der Information aus der zuletzt ausgelesenen Markierung ein entsprechender Navigationsbefehl erzeugt und an eine Fahreinheit des FTF ausgegeben wird.

Das FTF findet seinen Weg durch den Fahrkurs selbst. Die Informationsverarbeitung, und insbesondere die Weg- bzw. Routenfindung, erfolgt im FTF selbst. Eine übergeordnete herkömmliche Leitsteuerung wird nicht benötigt. Die FTF verfügen also über eine ausreichende eigene Intelligenz, um durch den Fahrkurs zum gewünschten Fahrziel zu navigieren.

Insbesondere ist im Datenspeicher ferner ein FTF-spezifisches Fahrziel überschreibbar hinterlegt. Vorzugsweise wird eine Navigation durch den Fahrkurs zum FTF-spezifischen Fahrziel vom jeweiligen FTF allein geregelt, indem das FTF-spezifische Fahrziel basierend auf den Navigationsregeln, und insbesondere ferner basierend auf einer Information einer zuletzt ausgelesenen Navigationsmarkierung angefahren wird.

Bei einer weiteren besonderen Ausgestaltung weist das FTF ferner auf: eine Spurerfassungseinheit; eine Lenkeinheit; und/oder eine Fahreinheit, die eingerichtet ist, das FTF entlang der Spuren zu fahren, das FTF zu stoppen und das FTF mittels der Lenkeinheit abbiegen zu lassen.

Die Spurerfassungseinheit realisiert die Zwangsführung des FTF. Die Lenkeinheit sorgt dafür, dass das FTF abbiegen kann. Die Fahreinheit bewegt das FTF durch den Fahrkurs und hält das FTF an Haltepunkten an.

Bei einer anderen bevorzugten Ausgestaltung werden die Strecken von allen FTF während einer festen Zeitdauer immer nur einer einzigen Richtung durchfahren.

Die unidirektionale Bewegung der FTF durch den Fahrkurs garantiert, dass sich die FTF innerhalb des Fahrkurses nicht entgegenkommen können. Die Regelung der Fahrtrichtung vereinfacht also die Verkehrskontrolle.

Weiter ist es bevorzugt, wenn das FTS leitsteuerungsfrei ausgebildet ist und vorzugsweise im Datenspeicher des FTF keine Information zu einer Topologie des Fahrkurses hinterlegt ist.

Insbesondere umfassen die Markierungen ferner Stationsmarkierungen.

Am Ort der Stationsmarkierungen können beliebend Personen oder Maschinen Interaktionen mit dem (wartenden) FTF durchführen, wie z.B. eine Beladung des FTF, eine Entladung des FTF oder ein energetisches Aufladen des FTF. Dies hängt von einem Typ der Station 26 ab.

Üblicherweise werden die Stationsmarkierungen an Orten positioniert, wo in bestehenden Anlagen bereits Arbeitsstationen (z.B. ein Kommisionierplatz, ein Befüllpunkt, etc.) positioniert sind. Auf diese Weise können unterschiedliche Stationstypen definiert werden. Bei der initialen Planung einer neuen Anlage werden die Stationsmarkierungen dort positioniert, wo es vom Systembetreiber gewünscht ist, wobei der Fahrkurs ebenfalls ideal nach den Wünschen des Systembetreibers planbar ist

Bei einer weiteren vorteilhaften Ausgestaltung umfassen die Stationsmarkierungen eine Information über eine jeweils zugeordnete Station, wobei die jeweils zugeordnete Station vorzugsweise einen Haltepunkt darstellt, wo das FTF für eine vorbestimmte Zeitdauer oder dauerhaft, bis es einen neues Fahrziel erhält, angehalten wird.

Vorzugsweise sind die Markierungen wiederbeschreibbare Datenpunkte, die auf oder entlang der Strecken positioniert sind und die von den FTF oder mittels einer externen Datenschreibvorrichtung berührungslos mit neuen Informationen beschreibbar sind.

Auf diese Weise ist es möglich, die Markierungen neu zu konfigurieren. Aus einer Verkehrskontrollmarkierung kann z.B. eine Navigationsmarkierung gemacht werden und umgekehrt. Dies kann bei einer Anlagenerweiterung oder bei einer Anlagenänderung von Vorteil sein, weil alte Markierungen nicht entfernt und durch neue Markierungen ersetzt werden müssen.

Insbesondere umfassen die Strecken: eine Hauptstrecke, die vorzugsweise einen Rundkurs definiert; und mindestens eine Nebenstrecke, die vorzugsweise eine Bucht definiert, deren Spur in einem Abzweigungspunkt aus der Spur der Hauptstrecke abgezweigt wird und deren Spur in einem stromabwärtsgelegenen Zusammenführungspunkt wieder mit der Spur der Hauptstrecke zusammengeführt wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: ein Blockdiagramm eines fahrerlosen Transportsystems;
- Fig. 2: einen schematischen Fahrkurs mit vier Stationen;
- Fig. 3: ein Blockdiagramm von Strecken;
- Fig. 4: ein Blockdiagramm einer Nebenstrecke;
- Fig. 5: eine schematisch dargestellt Bucht inklusive einer Station mit mehreren Markierungen;
- Fig. 6: ein Blockdiagramm von Markierungen;
- Fig. 7: eine perspektivische Draufsicht (Fig. 7A) und eine perspektivische Unteransicht (Fig. 7B) eines fahrerlosen Transportfahrzeugs;
- Fig. 8: ein Blockdiagramm eines fahrerlosen Transportfahrzeugs; und
- Fig. 9: einen Ausschnitt eines exemplarischen Fahrkurses mit zwei Hierarchiestufen.

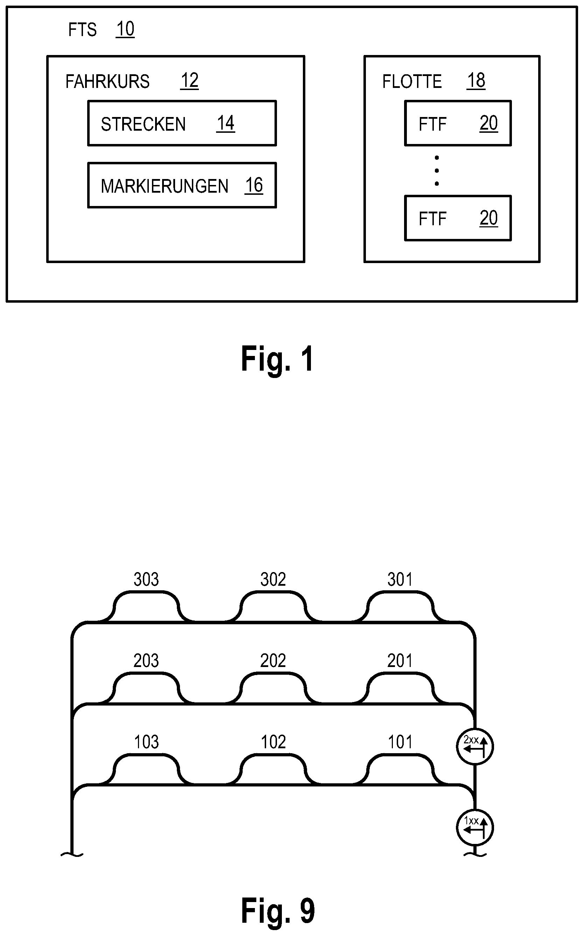

Fig. 1 zeigt ein Blockdiagramm eines fahrerlosen Transportsystems 10, das nachfolgend auch als FTS 10 bezeichnet wird. Das FTS 10 umfasst ein Fahrkurs 12 und eine Flotte 18. Der Fahrkurs 12 wird aus unidirektional befahrenen Strecken 14 und aus Markierungen 16 gebildet. Die Flotte 18 wird aus mindestens zwei fahrerlosen Transportfahrzeugen (FTF) 20 gebildet.

Im Gegensatz zu fahrerbedienten Fahrzeugen orientieren sich die FTF 20 eigenständig in einer bekannten Umgebung und fahren (zwangsgeführt) selbstständig entlang der Strecken 14, ohne von einem Bediener direkt gesteuert zu werden. Herkömmliche Gabelstapler sind z.B. fahrerbediente Fahrzeuge.

Die FTF 20 garantieren ein sicheres Agieren, d.h. alle Maßnahmen für einen Personenschutz sowie für den Schutz vor Beschädigungen an einer transportierten Last und Gegenständen in der Umgebung werden vom FTF 20 eigenständig erledigt, z.B. indem das FTF 20 mit ein oder mehreren (Abstands-) Sensoren (nicht dargestellt) zur automatisierten Erfassung von Hindernissen und mit einem Steuergerät versehen ist, das im Falle einer drohenden Kollision, die auf Basis der Sensorsignale erkannt wird, einen (Not-) Stopp des FTF 20 veranlasst.

Unter dem Begriff "Navigation" wird nachfolgend in Anlehnung an die DIN 13312:2005-02 eine Wegfindung (Routing) durch den Fahrkurs 12 sowie eine Positionsbestimmung innerhalb des Fahrkurses 12 verstanden. Das Auffinden eines Wegs bzw. einer Route (Wegfindung) von einem beliebigen Startpunkt zu einem beliebigen Zielpunkt durch den Fahrkurs 12 erfolgt in der vorliegenden Offenbarung durch das FTF 20 selbst, jedoch ohne dass das FTF 20 Kenntnis von einer Karte (Topologie) des Fahrkurses 12 hat. Das FTF 20 kennt den konkreten Verlauf der Strecken 14 innerhalb des Fahrkurses 12 nicht. Das FTF 20 hat keine Kenntnis von einer Länge, Form oder Position der Strecken 14 des Fahrkurses 12. Die Längen, Formen und Positionen der Strecken 14, die den Fahrkurs 12 bilden, definieren üblicherweise die "Karte" des Fahrkurses 12, die im Stand der Technik in einer übergeordneten (zentral oder dezentral agierenden) Leitsteuerung (nicht dargestellt, weil nicht vorhanden) und/oder im FTF 20 selbst hinterlegt ist. Das FTF 20 der vorliegenden Offenbarung navigiert ohne eine derartige Karte, d.h. das FTF 20 navigiert kartenlos und leitsteuerungsfrei.

Das FTS 10 verfügt also über keine Leitsteuerung, die im Stand der Technik (übergeordnet) für die Navigation jedes einzelnen FTF 20 und für eine Verkehrskontrolle der FTF 20 untereinander sorgt.

Unter dem Begriff "Verkehrskontrolle" wird in der vorliegenden Offenbarung eine Regelung eines Verkehrs von mehreren FTF 20 verstanden, die gleichzeitig im Fahrkurs 12 bewegt werden. Die Verkehrskontrolle hat das primäre Ziel, Kollisionen zwischen den FTF 20 zu vermeiden. Alternativ oder ergänzend sollen Verklemmungen und/oder Staus vermieden werden. Bei einer Verklemmung nähern sich zwei FTF 20 derart, dass sich die FTF 20 gegenseitig mit ihren Abstandssensoren erfassen und anschließend derart verkeilen, dass die FTF 20 nicht mehr aneinander vorbei fahren können, obwohl es noch zu keiner echten Kollision gekommen ist. Bei einer Kollision treffen sich die FTF 20 derart, dass es zu Beschädigungen an den FTF 20 und/oder den transportierten Lasten kommt.

In der vorliegenden Offenbarung wird die Verkehrskontrolle von den FTF 20 selbst, d.h. ohne eine Leitsteuerung, geregelt, wie es unten noch näher ausgeführt werden wird.

In der vorliegenden Offenbarung wird ein Fahrauftrag durch eine Bedienperson (manuelle Auslösung) oder eine Fahrauftragsabwicklung (automatisierte Auslösung), die nicht mit einer herkömmlichen Leitsteuerung zu verwechseln ist, an die FTF 20 übermittelt, wie später noch genauer erläutert werden wird.

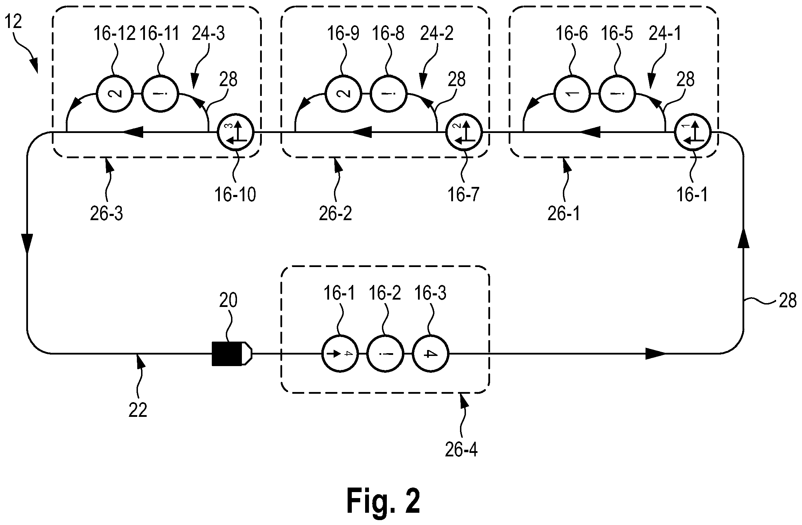

Fig. 2 zeigt eine Topologie (Lagebeziehung zwischen Objekten) eines exemplarischen Fahrkurses 12. Der Fahrkurs 12 der Fig. 2 umfasst eine Hauptstecke 22 sowie exemplarisch drei Nebenstrecken 24-1 bis 24-3. Es versteht sich, dass der Fahrkurs 12 allgemein mehr oder weniger Nebenstrecken 24 aufweisen kann. Der Fahrkurs 12 umfasst auch eine oder mehrere Stationen 26 (vgl. Fig. 2), die später noch im Detail erläutert werden.

Zur Vereinfachung der Erläuterung ist in der Fig. 2 isoliert nur ein einziges FTF 20 gezeigt. Es versteht sich, dass der Fahrkurs 12 der Fig. 2 üblicherweise von mehr als einem FTF 20 gleichzeitig befahren wird.

Die FTF 20 fahren in der Fig. 2 z.B. gegen den Uhrzeigersinn entlang der Hauptstecke 22. Es versteht sich, dass der Fahrkurs 12 auch in der entgegengesetzten Richtung durchfahren werden kann. Allgemein gilt, dass alle FTF 20 der (hier nicht näher gezeigten) Flotte 18 immer in der gleichen Richtung durch den Fahrkurs 12 fahren. Es versteht sich, dass die Fahrrichtung aber über die Zeit gewechselt werden kann. So ist es z.B. möglich, dass der Fahrkurs 12 z.B. vormittags entgegen dem Uhrzeigersinn durchfahren wird und nachmittags im Uhrzeigersinn durchfahren wird. Eine Dauer dieser Zeitphasen ist frei wählbar.

Ferner sind in der Fig. 2 exemplarisch zwölf Markierungen 16-1 bis 16-12 gezeigt. Allgemein gilt, dass die Markierungen 16 auf oder unmittelbar neben den Strecken 14 positioniert werden, um von den FTF 20 erfasst und ausgelesen zu werden, wie es nachfolgend noch näher erläutert werden wird. Die Markierungen 16 stellen Datenpunkte dar, wo Informationen hinterlegt sind, die von den FTF 20 gelesen (und ggf. auch geschrieben) werden können. Die Markierungen 16 sind vorzugsweise nicht vernetzt, d.h. nicht mit einer übergeordneten Steuerung oder einem Computernetzwerk in Verbindung, um hinterlegte Daten zu verändern. Die Markierungen 16 sind physisch vorhanden und insbesondere energielos betreibbar. QR-Codes, Strichcodes und RFID-Tags stellen einige exemplarische Markierungen 16 dar.

Generell gilt, dass eine oder mehrere Markierungen 16 eine Station 26 definieren. Die Station 26 umfasst neben der oder den Markierungen 16 zumindest eine Strecke 14 bzw. die entsprechende Spur 28, die auch virtuell sein kann, und einen (ein)eindeutig zugeordneten Stationsidentifikator.

Exemplarisch sind in der Fig. 2 vier Stationen 26-1 bis 26-4 gezeigt. Die Stationen 26-1 bis 26-3 umfassen jeweils einen Abschnitt der Hauptstecke 22, eine der Nebenstrecken 24 sowie drei Markierungen 16. Die Station 26-4 umfasst einen Abschnitt der Hauptstecke 22 und drei Markierungen 16. Die Station 26-4 ist also direkt auf der Hauptstecke 22 angeordnet und umfasst keine Nebenstrecke 24. Es versteht sich, dass auch Fahrkurse 12 definiert werden können, deren Station(en) 26 nur auf der Hauptstrecke 22 oder nur in einer oder mehreren Nebenstrecken 24 positioniert sein kann bzw. können.

Eine Länge und Form der Streckenabschnitte, die zu den Stationen 26 gehören, sind generell frei durch den Systembetreiber wählbar.

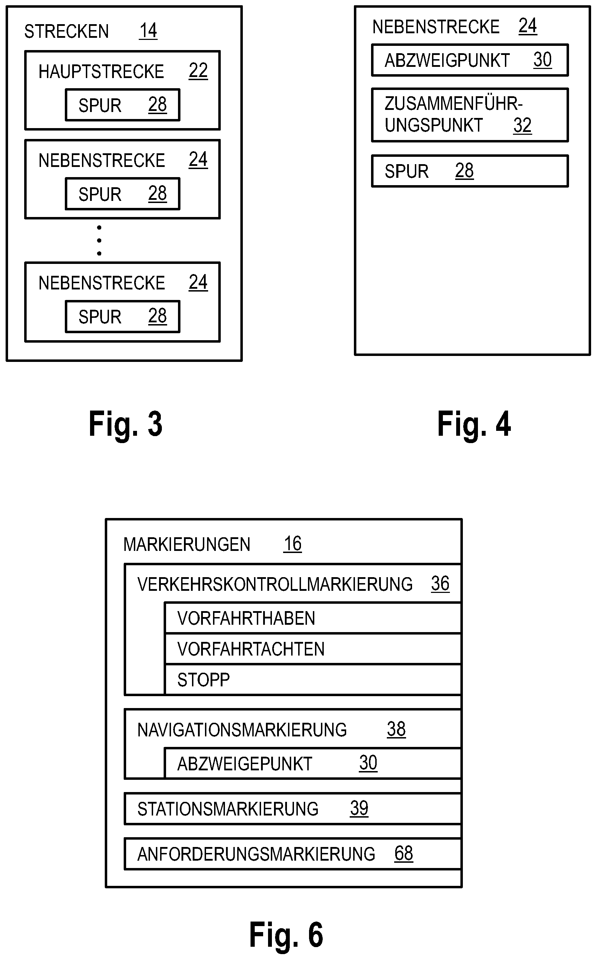

Wie in Fig. 3 veranschaulicht, weist jede der Strecken 14 eine (eigene) Spur 28 auf. Die Strecken 14 bzw. die Spuren 28 können optisch sichtbar sein, indem der Systembetreiber entsprechende (Farb-)Bahnen auf dem Boden positioniert (z.B. klebt, auslegt, malt, etc.). Die Spuren 28 können alternativ oder lediglich virtuell sein, indem der Systembetreiber z.B. lediglich die Markierungen 16 entlang eines einheitlichen Rasters (nicht dargestellt) auf dem Boden positioniert, wobei sich die Strecken 14 bzw. die Spuren 28 (optisch unsichtbar) zwischen den Markierungen 16 erstrecken.

Die Spuren 28 können physisch vorhanden sein und/oder virtuell zwischen zwei Topologiepunkten (Markierungen 16) definiert sein.

Allgemein gilt, dass der Fahrkurs 12 einen Weg festlegt, dem die FTF 20 zwangsgeführt folgen. Dies bedeutet, dass die FTF 20 den Spuren 28 folgen, die vorzugsweise berührungslos, durch die FTF 20 erfasst werden, wie es nachfolgend noch näher erläutert werden wird.

In einem einfachen Fall stellen die Spuren 28 auf den Boden geklebte oder gemalte Bahnen dar und werden von den FTF 20 z.B. mit Kameras optisch erfasst. Die FTS 20 können also nicht beliebig (d.h. autonom) navigieren, sondern müssen den Spuren 28 folgen. Die FTF 20 können also weder beliebige Orte im Raum anfahren, noch auf bzw. entlang beliebiger Wege fahren.

Die Markierungen 16 enthalten Informationen, und insbesondere (Vorfahrts- und/oder Navigations-) Regeln, die von den FTF 20 zu beachten sind, während sich die FTF 20 durch den Fahrkurs 12 bewegen. Diese Informationen sind üblicherweise stationsspezifisch, d.h. die Informationen sind eindeutig einer der Stationen 26 zugeordnet, indem sie mit einem entsprechenden (Stations-)Identifikator verknüpft sind. Stationsspezifische Informationen sind vorzugsweise räumlich begrenzt nur im Bereich der entsprechenden Station 26 gültig.

Die Markierungen 16 werden von den FTF 20 gelesen, intern interpretiert und intern umgesetzt, wie es nachfolgend noch näher erläutert werden wird. Eine übergeordnete Logik, wie z.B. eine Leitsteuerung, wird nicht benötigt.

Die Markierungen 16 können auch Informationen umfassen, die die FTF 20 vorbestimmte Funktionen bzw. Operationen durchführen lassen. Exemplarische Operationen sind: eine Feinpositionierung; ein Abbiegen; eine Anforderung für ein neues Fahrziel; Vorfahrt gewähren; Vorfahrt achten; Stopp; Energie aufladen; ein Tempolimit; (Abstands-) Sensoren ein/ausschalten. Bei der Feinpositionierung reduziert das FTF seine normale Fahrgeschwindigkeit, um unmittelbar danach anzuhalten. Beim Abbiegen verlässt das FTF 20 die Hauptstrecke 22 in Richtung einer der Stationen 26. Bei einer Anforderung werden freie FTF 20, die aktuell kein Fahrziel (Fahrauftrag) aufweisen, zu einer der Stationen 26 zum Zwecke einer Fahrzielvergabe gelenkt. Beim Vorfahrt gewähren lässt das FTF 20 ein anderes FTF 20 an einem Kreuzungspunkt oder Zusammenführungspunkt passieren. Bei einem Stopppunkt hält das FTF 20 an. Tempolimits legen Bereiche fest, wo die FTF 20 nicht mit ihrer Maximalgeschwindigkeit, sondern mit einer reduzierten Geschwindigkeit fahren dürfen. Die Sensoren werden ein-/ausgeschaltet, wenn die FTF 20 z.B. durch sehr enge Bereiche fahren müssen. In diesen Bereichen dürfen die FTF 20 aber nicht mit der Maximalgeschwindigkeit fahren.

Ein besonderer Vorteil des FTS 10 ist darin zu sehen, dass der Systembetreiber den Fahrkurs 12 selbst festlegen, und auch installieren, kann, so dass individuelle Bedürfnisse des Systembetreibers berücksichtigt werden können. Der Fahrkurs 12 kann jederzeit geändert werden. Die Strecken 14 und die Markierungen 16 können vom Systemhersteller nach einem Baukastenprinzip vorbereitet werden, um später vom Systembetreiber (dauerhaft) auf dem Boden positioniert zu werden. Die Markierungen 16 können vom Systembetreiber in geeigneten Abständen z.B. auf die Spuren 28 geklebt werden. Eine (Daten-)Verbindung der Markierungen 16 zu einer Leitsteuerung ist nicht vorhanden und wird nicht benötigt, weil die Markierung 16 bereits alle relevanten Informationen enthalten. Welche Regeln bei einer Planung und einer Errichtung von Fahrkursen 12 zu beachten sind, wird nachfolgend noch erläutert werden.

Üblicherweise besteht jeder Fahrkurs 12 aus einem Rundkurs. Der Rundkurs wird durch die Hauptstecke 22 definiert, die vorzugsweise in sich geschlossen, d.h. in Form einer Schleife, ausgebildet ist. Im Rundkurs können die FTF 20 in einer vom Systembetreiber festgelegten Richtung kreisen. Alle FTF 20 fahren dabei in der gleichen Richtung.

Auf der Hauptstecke 22 können beliebig viele Stationen 26 angeordnet werden. Alternativ oder ergänzend können beliebig viele Stationen 26 vorgesehen werden, die über Nebenstrecken 24 von der Hauptstecke 22 abzweigen und dann wieder in die Hauptstecke 24 zurückgeführt werden.

Deshalb weist jede der Nebenstrecken 24 einen Abzweigungspunkt 30, einen Zusammenführungspunkt 32 und die Spur 28 (vgl. Fig. 2) auf, wie es in Fig. 4 in Form eines Blockdiagramms veranschaulicht ist.

Die Nebenstrecken 24 definieren funktional Buchten 34, wo die (Arbeits-) Stationen 26 üblicherweise angeordnet werden. Ferner können die Nebenstrecke 24 funktional als Überholspuren und/oder Puffer (Parkplätze) genutzt werden.

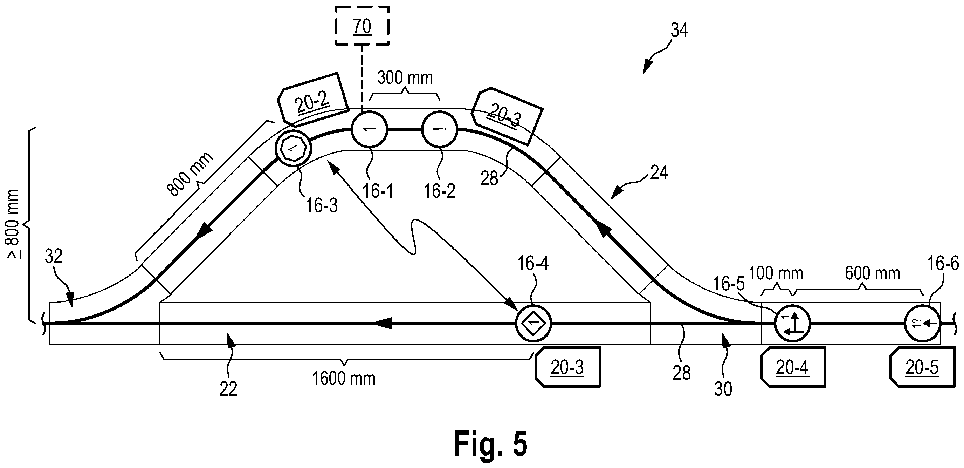

In Fig. 5 ist eine exemplarische Bucht 34 isoliert dargestellt, die Teil eines dort nicht näher dargestellten Fahrkurses 12 ist. Die Bucht 34 der Fig. 5 definiert z.B. eine der Stationen 26, die exemplarisch mit der Nummer "1" bezeichnet ist. Die Nummer "1" ist ein (Stations-) Identifikator bzw. eine ID (d.h. eine eineindeutige Kennung), der die Station 26 der Fig. 26 eindeutig innerhalb des FTS 10 bezeichnet.

Die Bucht 34 der Fig. 5 umfasst einen Abschnitt der Hauptstecke 22 und eine Nebenstrecke 24, die in einem Abzweigungspunkt 30 beginnt und in einem Zusammenführungspunkt 32 endet. Im Abzweigungspunkt 30 zweigt die Spur 28 der Nebenstrecke 24 aus der Spur 28 der Hauptstecke 22 ab. Aus der einen Spur 28 der Hauptstecke 22 werden also zwei Spuren 28, wobei sich die Spur 28 der Hauptstecke 22 linear fortsetzt und die Spur 28 der Nebenstrecke 24 in der Fahrtrichtung nach rechts abzweigt. Der in der Fig. 5 dargestellte Teil des Fahrkurses 12 wird von rechts nach links durchfahren. Im Zusammenführungspunkt 32 werden die Spuren 28 der Hauptstecke 22 und der Nebenstrecke 24 wieder zusammengeführt. Dies bedeutet, dass aus den zwei Spuren 28 wieder eine einzige Spur 28 wird.

Die Markierung 16-1 legt einen Haltepunkt für die FTF 20 innerhalb der Station 26 mit der Bezeichnung "1" fest, wo z.B. (hier nicht gezeigte und bezeichnete) Güter von den FTF 20 aufgenommen oder abgegeben werden können. FTF 20, die zu dieser Station "1" unterwegs sind und die somit die Markierung 16-1 als Ziel eines Fahrauftrags haben, werden an der Markierung 16-1 anhalten und auf eine neue Zieleingabe warten, wie es nachfolgend noch erläutert werden wird. Die Markierung 16-1 legt die eigentliche Position der Station "1" fest. Zur Station "1" gehören aber auch weitere Markierungen 16-2 bis 16-6, die nahezu alle mit dem gleichen Stationsidentifikator (hier "1") verknüpft sind. Nur die Markierung 16-2 ist nicht stationsspezifisch, weil sie allgemein gültige Informationen umfasst, die nicht mit einem Stationsidentifikator verknüpft werden muss, aber verknüpft werden könnte.

Die Markierung 16-2 ist stromaufwärts zur Markierung 16-1 positioniert. In der Fig. 5 ist die Markierung 16-2 z.B. in einem Abstand von 300 mm zur Markierung 16-1 positioniert. Die Markierung 16-2 umfasst Informationen, die eine Feinpositionierung des sich nähernden FTF 20-1 hervorrufen. Da die FTF 20 z.B. mit einer (Nenn-) Fahrgeschwindigkeit von z.B. 1 m pro Sekunde fahren, muss das FTF 20-1 kurz vor einem Erreichen der Station "1" (Markierung 16-1) rechtzeitig abgebremst werden, damit sich das FTF 20-1 an der Station "1" auch exakt positionieren kann. Es versteht sich, dass die Feinpositionierung optional ist und vom Fahrzeugtyp (z.B. mittlere Geschwindigkeit, Bremsweg, etc.) abhängt. Die Markierung 16-2 kann z.B. durch ein Ausrufezeichen symbolisiert werden und die Information beinhalten, dass die Fahrgeschwindigkeit ab hier auf einen kleineren Wert zu drosseln ist. Ferner kann die Markierung 16-2 eine Information darüber umfassen, wie weit die Markierung 16-1 noch entfernt ist. Die Markierung 16-2 muss nicht stationsspezifisch sein, d.h. keine Information über den Stationsidentifikator enthalten. Wenn eine Nebenstrecke 24 aber mehrere Stationen 26 hintereinander aufweist, kann es sinnvoll sein, die Feinpositionierungs-Markierung 26-2 ebenfalls stationsspezifisch auszulegen, d.h. mit dem entsprechenden Stationsidentifikator zu verknüpfen.

Wenn ein FTF 20 die Station "1", d.h. die Markierung 16-1, unter vorheriger Vergabe eines entsprechenden Ziels innerhalb des Fahrkurses 12 wieder verlässt, erreicht es die stromabwärts angeordnete stationsspezifische Markierung 16-3, vgl. FTF 20-2. Die Markierung 16-3 ist stationsspezifisch, weil sie den Stationsidentifikator "1" als Information umfasst.

Die Stationsidentifikatoren sind hier exemplarisch als ganze Zahl veranschaulicht. Es versteht sich, dass die Stationsidentifikatoren auch durch andere Zeichen, wie z.B. Buchstaben oder Ähnliches, realisiert werden können, die die ihnen zugeordneten Stationen 26 jeweils eindeutig bezeichnen.

Exemplarisch symbolisiert die Markierung 16-3 eine Stopp-Funktion für die Station "1". Es versteht sich, dass die Funktionssymbole generell beliebig gewählt werden können und die hier gewählte achteckige Form eines Stoppschild lediglich exemplarischer Natur ist, um einer Bedienperson oder dem Systembetreiber die Funktion der jeweiligen Markierung 16 zu visualisieren. Die Markierungen 16 müssen generell nicht zwingend mit Symbolen versehen sein. Es reicht aus, wenn die Markierungen 16 eine Information über eine entsprechende Funktion (Feinpositionierung, Vorfahrtachten, Vorfahrthaben, Haltepunkt, Abzweigepunkt, Zusammenführpunkt, etc.) umfassen. Die Markierung 16-3 signalisiert einen potenziellen (temporären) Stopppunkt für das FTF 20 und wird insbesondere benötigt, wenn zwei Spuren 28 über einen Zusammenführungspunkt 32 wieder zusammengeführt werden.

Dies ist in der Fig. 5 der Fall, weil die Spur 28 der Nebenstrecke 24 wieder in die Spur 28 der Hauptstecke 22 einmündet. Das FTF 20-2, das an der Markierung 16-3 vorbeifährt, liest diese Markierung 16-3, wertet die dort umfasste Information aus, stoppt ggf. und sendet optional direkt an andere FTF 20 seine Absicht, im Bereich der Station "1" wieder in die Hauptstecke 22 einfahren zu wollen, wie es nachfolgend noch näher erläutert werden wird. Insbesondere prüft das FTF 20-2, ob es ein Vorfahrtsignal von einem anderen FTF 20, z.B. dem FTF 20-3, empfangen hat, das mit dem gleichen Stationsidentifikator "1" verknüpft ist. Wenn kein anderes FTF 20 in der unmittelbaren Umgebung der Station "1" unterwegs ist, das ein entsprechendes Vorfahrtsignal (Vorfahrthaben) aussendet, kann das FTF 20-2 seinen Weg von der Markierung 16-3 zum Zusammenführungspunkt 32 fortsetzen.

Ein Vorfahrtsignal (Vorfahrthaben) könnte aber von dem anderen FTF 20-3 ausgesendet werden, das im Bereich der Station "1" auf der Hauptstecke 22 fährt und dort die Markierung 16-4 erreicht. Die Markeriung16-4 wird von dem anderen FTF 20-3 ausgelesen und veranlasst das andere FTF 20-3 dazu, ein Vorfahrthabensignal auszusenden, das für die (Arbeits-) Station "1" spezifisch ist, weil es den entsprechenden Stationsidentifikator enthält. Sinngemäß enthält dieses Vorfahrthabensignal die Information, dass sich auf der Hauptstecke 22 im Bereich der Station "1" ein FTF 20 befindet, das an der Station "1" vorbeifahren will und das Vorfahrt vor allen anderen FTF 20 innerhalb der Station "1" hat (Vorfahrthaben). Andere FTF 20, wie das FTF 20-2, die sich auf der Nebenstrecke 24 der Station "1" befinden, sind ausreichend nahe, d.h. sie befinden sich im Bereich der gleichen Station "1", um das Vorfahrtsignal zu empfangen und beachten zu müssen. Wenn das FTF 20-2, das sich bei der Markierung 16-3 befindet, dieses Vorfahrtsignal empfängt, hält das FTF 20-2 bei der Markierung 16-3 an, lässt das FTF 20-3, das das Vorfahrthabensignal für die Station "1" aussendet, passieren und fährt dann selbst auf die Hauptstecke 22 ein, weil sich die beiden FTF 20-2 und 20-3 im Bereich der gleichen Station "1" bewegen, was aus dem mitübertragenen übereinstimmenden Stationsidentifikator ableitbar ist. Eine FTF-spezifische Kommunikation findet nicht statt, d.h. die FTF 20-2 und 20-3 tauschen weder FTF-Kennungen aus, noch sprechen sie sich gegenseitig darüber an. Sie sprechen direkt miteinander, vgl. Pfeil in Fig. 5.

Andere FTF 20 (nicht in Fig. 5 gezeigt), die sich ggf. ebenfalls innerhalb der Kommunikationsreichweite aber außerhalb der Station "1" befinden, können das Vorfahrthabensignal zwar ebenfalls empfangen, erkennen aber anhand des Stationsidentifikators, dass sie nicht betroffen sind. Die Stationsidentifikatoren unterscheiden sich in diesen Fall. Diese anderen FTF 20 haben den Identifikator der Station "1" in unmittelbarer Vergangenheit nicht ausgelesen und wissen daher, dass sie sich nicht im Bereich der Station "1" befinden. Dies bedeutet insbesondere, dass diese anderen FTF 20 zwar den gleichen Stationsidentifikator auch irgendwann einmal gelesen haben könnten, ihn aber wieder überschrieben haben, da sie zwischenzeitlich (d.h. zuletzt) eine Markierung 16 gelesen haben, deren Information(en) mit einem anderen Stationsidentifikator verknüpft ist. Alternativ könnte ein zuletzt ausgelesener Stationsidentifikator z.B. nach einem vorbestimmten Timeout, nach einem Zurücklegen einer vorbestimmten Fahrstreckenlänge und/oder nach einem Erkennen des Zusammenführungspunkts 32 nicht mehr gültig sein.

Es versteht sich, dass der jeweils aktuell gültige Stationsidentifikator im jeweiligen FTF 20 (separat) gespeichert werden kann.

Auf diese Weise wird der Verkehr in der Umgebung der Station "1" ohne Leitsteuerung durch eine direkte FTF-unspezifische Kommunikation zwischen den FTF 20 geregelt.

Die (Vorfahrthaben-) Markierung 16-4 ist wie die (Vorfahrtachten-) Markierung 16-3 ausreichend weit vom Zusammenführungspunkt 32 entfernt angeordnet, so dass eine Kollision der FTF 20 ausgeschlossen ist, die sich nahezu gleichzeitig dem Zusammenführungspunkt 32 nähern.

Die Abstände der Markierungen 16-3 und 16-4 sind (vom Systemhersteller) exemplarisch mit 800 mm und 1.600 mm gewählt. Die Größe dieser Abstände hängt von den Fahrgeschwindigkeiten und einer Reaktionsgeschwindigkeit der FTF 20 ab und kann variiert werden. Der Systemhersteller kann dem Systembetreiber z.B. entsprechende Abstandsschablonen an die Hand geben, um die Markierungen 16-3 und 16-3 am richtigen Ort zu positionieren.

Wie in Fig. 6 durch ein Blockdiagramm veranschaulicht, können die Markierungen 16 Verkehrskontrollmarkierungen 36, Navigationsmarkierungen 38 und Stationsmarkierungen 39 sein. Diese Aufzählung ist nicht abschließend. Ferner könnten z.B. auch Anforderungsmarkierungen 68 und/oder weitere Markierungstypen umfasst sein.

Die Verkehrskontrollmarkierungen 36 enthalten Informationen über Vorfahrtsregelungen in durch die Stationen 26 räumlich begrenzten und gekennzeichneten Bereichen des Fahrkurses 12. Die Verkehrskontrollmarkierungen 36 sind stationsspezifisch, d.h. mit dem entsprechenden Stationsidentifikator verknüpft.

Eine Vorfahrtsregelung wird insbesondere stromaufwärts zu den Zusammenführungspunkten 32 benötigt, weil dort die Gefahr besteht, dass die FTF 20, die auf unterschiedlichen Spuren 28 fahren, beim Vereinen dieser Spuren 28 miteinander kollidieren. Die Verkehrskontrollmarkierungen 36 regeln insbesondere die Vorfahrt, das Vorfahrtachten und ein Anhalten. Die Markierungen 16-3 und 16-4 der Fig. 5 stellen Verkehrskontrollmarkierungen 36 dar.

Die Navigationsmarkierungen 38 dienen der Navigation und werden nachfolgend näher erläutert. Die Navigationsmarkierungen sind ebenfalls stationsspezifisch, d.h. mit einem der Stationsidentifikatoren verknüpft.

In der Fig. 5 stellt die Markierung16-5 eine exemplarische Navigationsmarkierung 38 dar, die dem FTF 20-4 den Abzweigungspunkt 30 der Station "1" ankündigt. Die Abzweigung zur Station "1" erfolgt in Fahrtrichtung nach rechts. Die Hauptstecke 22 verläuft geradeaus weiter. Diese Information ist in der Markierung 16-5 hinterlegt und wird von dem FTF 20-4 beim Überfahren ausgelesen. Wenn das FTF 20-4 die Station "1" als Fahrziel gespeichert hat, wird das FTF 20-4 am Abzweigungspunkt 30 der Fig. 5 zur Markierung 16-1 abfahren, weil die Information der Markierung 16-5 mit dem entsprechenden Stationsidentifikator verknüpft ist, der mit dem Stationsidentifikator übereinstimmt, der mit dem Fahrziel verknüpft ist.

Die Markierung 16-5 wird vor dem Abzweigungspunkt 30 auf der Spur 28 der Hauptstecke 22 positioniert. In der Fig. 5 ist die Markierung 16-5 z.B. 100 mm vor dem Abzweigungspunkt 30 positioniert. Das FTF 20, das über die Markierung 16-5 fährt und diese ausliest, erhält also die Information, dass beim nächsten Abzweigungspunkt 30 ein Abbiegen nach rechts zur Station "1" möglich ist.

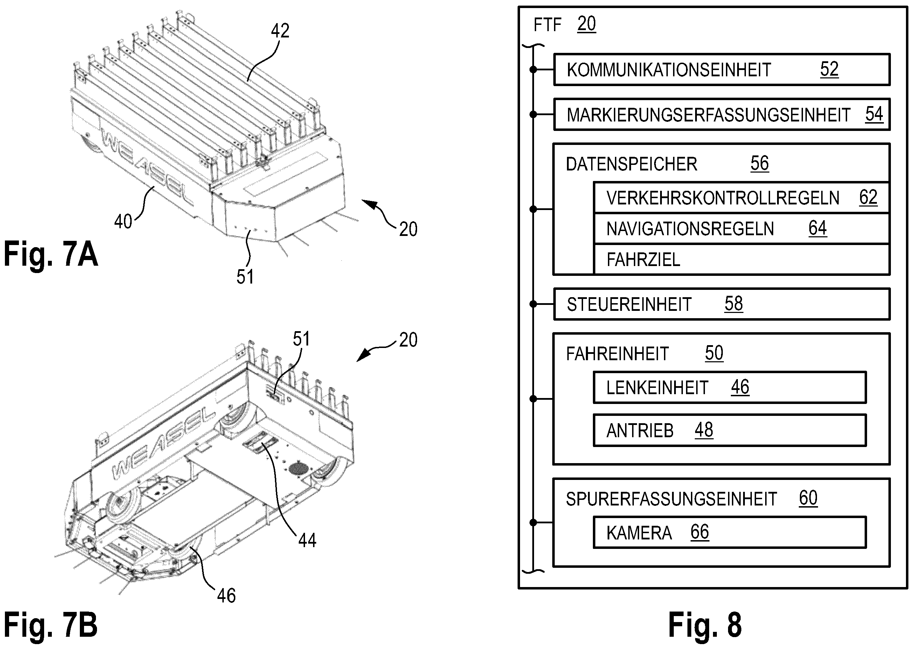

FTF 20, die die Station "1" als Fahrziel haben, werden also in der Fig. 5 die Hauptstrecke 22 am Abzweigungspunkt 30 verlassen, weil die Markierung 16-5 die Abzweigung zur Station "1" signalisiert. Die Navigationsmarkierung 16-5 wird von den FTF 20 also zum Navigieren benutzt. In jedem der FTF 20 sind entsprechende Navigationsregeln 64 (vgl. Fig. 8) dauerhaft hinterlegt, die von den FTF 20 zur Interpretation der ausgelesenen Information benutzt werden. Analoges gilt für Verkehrskontrollregeln 62, die in alle FTF 20 hinterlegt sind, wie nachfolgend noch erläutert werden wird.

Es versteht sich, dass neben der Y-förmigen Abzweigung, die in Fig. 5 veranschaulicht ist, andere Abzweigungsformen mit z.B. mehr als einer Abzweigung realisiert werden können.

Nachfolgend wird unter Bezugnahme auf die Fig. 7 und 8 eine Struktur der FTF 20 näher erläutert werden.

In Fig. 7 ist ein exemplarisches FTF 20 in einer perspektivischen Draufsicht (Fig. 7A) und einer perspektivischen Unteransicht (Fig. 7B) gezeigt, das unter der Bezeichnung "Weasel" vertrieben wird. Fig. 8 zeigt ein allgemein gültiges Blockdiagramm eines FTF 20, wie es bei der vorliegenden Offenbarung zum Einsatz kommt.

Aufgrund der fehlenden Leitsteuerung muss das FTF 20 nicht konfiguriert werden. Dies bedeutet, dass einer übergeordneten Steuerung keine eindeutige Kennzeichnung (Identifikator) des FTF 20 übermittelt werden muss, um die Navigation (Routenfindung) und die Verkehrskontrolle zu implementieren. Die FTF 20 implementieren diese Funktionen selbständig.

Jedes FTF 20 umfasst ein Chassis 40, auf dem z.B. ein kammförmiger Aufbau 42 angeordnet sein kann, wo Transportgüter (nicht dargestellt) positioniert werden. Jedes FTF 20 umfasst ferner eine hier nicht näher bezeichnete Energiequelle, um autark durch den Fahrkurs 12 bewegt werden zu können. Es ist natürlich auch möglich, das FTF 20 mit einem Stromabnehmer 44 zu versehen.

Ferner weist jedes FTF 20 eine Lenkeinheit 46 auf, um Spuren 28 folgen zu können, die sich verzweigen. Die Lenkeinheit 46 (Fig. 7B) ist wie ein Antrieb 48 ein Bestandteil einer Fahreinheit 50 (Fig. 8). Ferner kann das FTF 20 ein oder mehrere Lampen 52 aufweisen, um Betriebszustände für den Systembetreiber optisch wahrnehmbar zu machen.

Wie im Blockdiagramm der Fig. 8 veranschaulicht, umfasst jedes FTF 20 neben der Fahreinheit 60 eine Kommunikationseinheit 52, eine Markierungserfassungseinheit 54, einen Datenspeicher 56, eine Steuereinheit 58 und eine Spurerfassungseinheit 60, die intern über eine nicht gezeigte Datenverbindung Daten, insbesondere Steuersignale, miteinander austauschen.

Die Kommunikationseinheit 52 ist zum Austausch von Daten (Kommunikation) mit einer anderen Kommunikationseinheit 52 eines anderen FTF 20 eingerichtet. Mit der Kommunikationseinheit 52 können die FTF 20 z.B. das stationsspezifische Vorfahrtsignal, Fahraufträge, Fahrziele und Ähnliches aussenden oder empfangen, wie es oben in Zusammenhang mit der Fig. 5 beschrieben wurde.

Die Markierungserfassungseinheit 54 ist eingerichtet, Informationen aus den Markierungen 16 auszulesen. Das Auslesen erfolgt vorzugsweise berührungslos.

Die Markierungen 16 können, wie oben erwähnt, z.B. durch RFID-Tags oder QR-Codes implementiert werden. Die Markierungserfassungseinheit 54 ist dann entsprechend eingerichtet, die Informationen auf diesen Markierungen 16 mit den richtigen Mitteln auszulesen. Die Markierungserfassungseinheit 54 kann auch eingerichtet sein, Informationen in die Markierungen 16 zu schreiben. Dies ist insbesondere möglich, wenn die Markierungen 16 durch RFID-Tags implementiert sind.

Im Datenspeicher 56 sind die Verkehrskontrollregeln 62 und die Navigationsregeln 64 dauerhaft hinterlegt. Die Verkehrskontrollregeln 62 und die Navigationsregeln 64 sind für alle FTF 20 gleich. Ferner können ein Fahrziel und ein zuletzt gelesener Stationsidentifikator dort hinterlegt werden.

Die Verkehrskontrollregeln 62 definieren z.B., dass beim Überfahren der Markierung 16-4 der Fig. 5 die Kommunikationseinheit 52 veranlasst wird, das Vorfahrthabensignal (inklusive der entsprechenden Stationskennung, hier "1") auszusenden. Die entsprechende Information wird durch die Markierungserfassungseinheit 54 aus der Markierung 16-4 ausgelesen und durch die Steuereinheit 58 derart verarbeitet, dass die Kommunikationseinheit 52 zur Aussendung des stationsspezifischen Vorfahrthabensignals veranlasst wird.

Beim Überfahren der Markierung 16-3 der Fig. 5 erfasst die Markierungserfassungseinheit 54 die Information, dass das entsprechende FTF 20-2 anzuhalten ist, wenn dieses FTF 20-2 ein Vorfahrthabensignal empfängt, das mit der Kennung der Station "1" verknüpft ist. Die entsprechende Datenverarbeitung erfolgt wiederum durch die Steuereinheit 58 dieses FTF 20-2, wobei die Kommunikationseinheit 52 dieses FTF 20-2 veranlasst wird, empfangene Vorfahrthabensignale zu analysieren. Wird ein Vorfahrthabensignal mit der richtigen Stationskennung empfangen, ist diese Information für dieses FTF 20-2 relevant und dieses FTF 20-2 hält an. Die entsprechende Logik ist in den oben erwähnten Verkehrskontrollregeln 62 hinterlegt.

Die Steuereinheit 58 verarbeitet auch Informationen aus den (stationsspezifischen) Navigationsmarkierungen 38, wie z.B. aus der Markierung 16-5 der Fig. 5. In diesem Fall veranlasst die Steuereinheit basierend auf der Information aus der Markierung 16-5 die Erzeugung eines Navigationsbefehls, der von der Fahreinheit 50 des FTF 20-4 entsprechend umgesetzt wird (hier: Abbiegen nach rechts zur Station "1", vorausgesetzt die Station "1" ist als Fahrziel im Speicher 56 hinterlegt).

Der hier verwendete Begriff "Steuereinheit" kann jedes Prozessor-basierte oder Mikroprozessor-basierte System umfassen, das z.B. einen Mikrocontroller (etwa eine SPS), einen Rechner mit einem reduzierten Befehlssatz (RISC), Kundenschaltkreise (ASICS), logische Schaltungen oder irgendeine andere Schaltung oder einen Prozessor einschließlich einer Hardware, Software oder einer Kombination derselben verwenden, die zum Ausführen der hier beschriebenen Funktionen eingerichtet sind.

Die Steuereinheit 58 der FTF 20 kann z.B. einen oder mehrere Prozessoren umfassen, die zum Steuern eines Betriebs der oben beschriebenen FTF 20 eingerichtet sind. Die Steuereinheit 58 ist eingerichtet, Anweisungen auszuführen, die in ihrem Datenspeicher 56 zum Verarbeiten von Daten gespeichert sind.

Die Instruktionen können verschiedene Befehle umfassen, die das FTF 20 als Verarbeitungsmaschine spezifische Operationen durchführen lässt, wie z.B. die beschriebene Vorfahrtsregelung und Navigation. Die Anweisungen liegen üblicherweise in Form von Software vor. Es versteht sich, dass die Anweisungen auch als Hardware mit entsprechend verknüpften Anweisungen implementiert sein könnte.

Es versteht sich, dass die Navigation stationsspezifisch erfolgt. In den Fig. 2 und 5 tragen die Stationen 26 nur einstellige Identifikatoren. Es ist aber auch möglich, die Stationen 26 unter Berücksichtigung von Gruppen anzufahren, indem die entsprechenden Stationsidentifikatoren mehrstellig definiert werden.

Mehrstellige Stationsidentifikatoren zeigen pro Identifikatorstelle (Digit) eine Hierarchiestufe an. In einem System mit z.B. drei Hierarchien bzw. Gruppen könnte ein mögliches Fahrziel (Zielstation 26) z.B. die Kennung "352" aufweisen. In diesem Fall wird eine der Navigationsmarkierung 38 für die erste Hierarchiestufe in Form der Kennung "3xx" realisiert werden, um eine Abzweigung aus der Hauptstrecke 22 in eine (sequenziell angeordnete) dritte Bucht 34 (nicht dargestellt) der ersten Hierarchiestufe anzuzeigen. Die hierarchisch nächste Untergruppe wird durch den Identifikator "35x" oder "5x" dargestellt werden und stellt die fünfte Bucht 34 dar, die wiederum aus der oben erwähnten Bucht 34 der ersten Hierarchiestufe abzweigt. Die Zielstation 26 wird die Kennung "352" tragen und stellt die zweite abzweigende Bucht 34 der dritten Hierarchiestufe dar. Auf diese Weise lassen sich sehr komplexe Fahrkurse 12 mit sehr vielen Stationen 26 hinsichtlich der Navigation problemlos abbilden, indem eine oder mehrere Buchten 34 aus bereits definierten Buchten 34 abzweigen.

Es versteht sich, dass die Zusammenführungspunkte 32 von mehreren Buchten 34 generell in einem einzigen Zusammenführungspunkt 32 vereint werden können (Harfe).

Fig. 9 zeigt einen exemplarischen Fahrkurs 12 mit zwei Hierarchiestufen, wobei jede der (Haupt-) Buchten 34 "1xx", "2xx" und "3xx" (1. Stufe) jeweils drei Station 26 "x01", "x02" und "x03" (2. Stufe) aufweist.

Zurückkehrend zur Fig. 8 erfasst die Spurerfassungseinheit 60, die z.B. durch eine Kamera 60 (optische Erfassung) oder einen Magnetsensor implementiert sein kann, permanent die Spur 28 (unmittelbar) vor und/oder unter dem FTF 20.

Die Spurerfassungseinheit 60 ist eingerichtet, eine Position und Orientierung der Spur 28 zu erfassen und in ein entsprechendes Signal zu wandeln, das von der Steuereinheit 58 ausgewertet wird, um das FTF 20 auf Basis der Navigationsregeln 64 durch den Fahrkurs 12 zum jeweiligen Fahrziel zu navigieren. Zu diesem Zweck reicht die Kenntnis des Fahrziels allein aus. Eine Kenntnis von Zwischenpunkten und der Topologie des Fahrkurses 12 ist nicht erforderlich.

Es ist zu beachten, dass die Kommunikation zwischen den FTF 20 untereinander direkt mittels der Kommunikationseinheiten 52 der Fig. 8 erfolgt. Dies bedeutet, dass keine vermittelnden Einrichtungen, wie z.B. eine Leitsteuerung gemäß dem Stand der Technik, dazwischengeschaltet sind. Die FTF 20 kommunizieren zur Verkehrskontrolle unmittelbar miteinander.

Die Kommunikation erfolgt aber generell stationsabhängig bzw. stationsspezifisch. Die Signale bzw. Informationen, die zwischen den FTF 20 ausgetauscht werden, umfassen immer eine "Orts- bzw. Bereichsangabe", die regelt, für welchen Bereich des Fahrkurses 12 das ausgetauschte Signal bzw. die ausgetauschten Informationen gültig sind.

Im Beispiel der Fig. 5 erfolgt die Kommunikation unter Berücksichtigung der Station "1". Dies bedeutet, dass die FTF 20, die sich im Bereich der Station "1" aufhalten, nur auf solche der FTF 20 reagieren, die sich ebenfalls im Bereich der Station "1" aufhalten und die die Kennung der Station "1" mitsenden oder die darauf achten, dass die entsprechende Kennung empfangen wird.

Wenn ein anderes FTF 20, das sich im Bereich einer (nicht dargestellten) Station "2" aufhält, kommuniziert (d.h. sendet und/oder empfängt), interagiert dieses andere FTF 20 nicht mit dem FTF 20 der Station "1", weil sich die Kennungen der Stationen "1" und "2" unterscheiden. Somit ist es möglich, dass Stationen derart nahe zueinander positioniert werden, dass eine Kommunikation zwischen den FTF 20 innerhalb unterschiedlicher Stationen 26 grundsätzlich möglich ist, aber aufgrund der unterschiedlichen Stationskennung keine Interaktion erfolgt.

Diese Steuerung der Interaktion kann zusätzlich dadurch unterstützt werden, dass die Kommunikationseinheit 52 vorzugsweise eine drahtlose Kurzdistanz-Kommunikationseinheit 52 ist. Kurzdistanz-Kommunikationseinheiten 52 kommunizieren nur über kurze Distanzen, d.h. z.B. mit einer Reichweite von z.B. 10 m bis 15 m innerhalb von Räumen. Die Reichweite einer Kurzdistanzkommunikation ist also lokal begrenzt. Es versteht sich, dass die Reichweite von einer Senderstärke abhängig ist und somit variieren kann. Die Kurzdistanz-Kommunikationseinheiten 52 können z.B. durch Bluetooth-Einheiten, insbesondere der Klasse 2 oder Bluetooth LE, implementiert sein.

Die Kommunikationseinheiten 52 kommunizieren also vorzugsweise über Funk direkt miteinander. Die Installation eines flächendeckenden WLAN-Systems wäre zwar auch möglich, wird aber nicht benötigt, weil für die Verkehrskontrolle nur solche der FTF 20 miteinander kommunizieren müssen, die so nahe zueinander positioniert sind, dass sie miteinander kollidieren könnten. FTF 20, die sich kollisionsgefährlich nahe sind, regeln den Verkehr direkt untereinander.

Fahrziele können ebenfalls über die (Kurzdistanz-)Kommunikation vergeben werden.

Jede der Stationen 26 kann optional mit einem Terminal 70 (nicht dargestellt) versehen sein, vgl. Fig. 5, das wiederum eine eigene Kommunikationseinheit 52 aufweist, die eingerichtet ist, entsprechende Signale zu senden und zu empfangen, die von den Kommunikationseinheiten 52 der FTF 20 empfangen und gesendet werden.

Es versteht sich, dass nicht jede der Stationen 26 mit einem Terminal 70 versehen muss. Das FTS 10 kann eine oder mehrere Stationen 26 mit jeweils einem Terminal 70 und/oder eine oder mehrere Stationen 26 ohne Terminals 70 umfassen.

Das Terminal 70 (z.B. Tablet, Laptop, Mini-PC, Smartphone, etc.) ist vorzugsweise in der Nähe der Stationsmarkierungen 39 (vgl. Markierung 16-1 in Fig.5) positioniert, wo z.B. eine Bedienperson (nicht dargestellt) mit den FTF 20 interagieren (z.B. Beladung, Entladung, etc.) kann. Das Terminal 70 kann mit einer separat vorgesehenen Fahrauftragsabwicklung (nicht dargestellt) verbunden sein, um Fahraufträge automatisiert an die FTF 20 zu übertragen.

Die Bedienperson oder eine zentrale Fahrauftragsverwaltung (nicht dargestellt) können über das Terminal 70 ein neues Fahrziel an jedes (freie) FTF 20 übermitteln, das dieses neue Fahrziel dann in seinem Speicher 56 hinterlegt und bei einer zukünftigen Navigation berücksichtigt.

Damit das FTF 20 das neue Fahrziel übernehmen kann, sollte es aktuell kein Fahrziel gespeichert haben. Das FTF 20 ist in diesem Fall frei. Das Terminal 70 kann freie FTF 20, die ohne aktuelles Fahrziel unterwegs sind, auch anfordern, indem das Terminal 70 ein entsprechendes stationsspezifisches Rufsignal (Anforderungssignal) aussendet.

Ein freies FTF 20, z.B. das FTF 20-5 in Fig. 5, das aktuell kein Fahrziel hat und das die Markierung 16-6 in der Fig. 5 liest, empfängt diesen stationsspezifischen Ruf, erkennt, dass es keinen Fahrauftrag bzw. kein Fahrziel hat, und fährt dann zur Markierung 16-1 (Station "1").

Die Markierung 16-6 der Fig. 5 stellt einen weiteren Markierungstyp dar, nämlich eine Anforderungsmarkierung 68 (vgl. Fig. 6), die das FTF 20-5 dazu veranlasst, zu prüfen, ob das FTF 20-5 aktuell ein Fahrziel hat oder nicht. Wenn das FTF 20-5 feststellt, dass es aktuell kein Fahrziel hat, biegt das FTF 20-5 zur rufenden Station 26 ab, indem das FTF 20-5 z.B. die rufende Station 26 als neues Fahrziel in seinem Datenspeicher 56 ablegt und ggf. der rufenden Station 26 auch mitteilt, dass das FTF 20-5 den Ruf akzeptiert hat, so dass das Terminal 70 der rufenden Station 26 sein Rufen beenden kann.

Wenn das FTF 20-5 an der Markierung 16-1 angekommen ist, sendet das FTF 20-5 eine entsprechende Information an das Terminal 70, nämlich dass es angekommen ist und dass es zur Speicherung eines neuen Fahrziels bereit ist. Diese Aktion (Ankunft und Bereitschaft an Terminal 70 senden) kann in der Markierung 16-6 und/oder in den Navigationsregeln 64 hinterlegt sein. Das Terminal 70 sendet dann das neue Fahrziel an das an der Markierung 16-1 wartende FTF 20-5. Sobald das neue Fahrziel im FTF 20-5 hinterlegt ist, beginnt das FTF 20-5 selbstständig gemäß den Navigationsregeln 64 zu diesem neuen Ziel zu navigieren.

Die Vergabe eines neuen Fahrziels kann also manuell durch die Bedienperson oder automatisiert durch die Fahrauftragsabwicklung veranlasst werden, die in diesem Fall mit dem (stationsspezifischen) Terminal 70 in (drahtloser oder verdrahteter) Verbindung steht.

Das Terminal 70 kann auch benutzt werden, um andere Aktionen zu veranlassen, wie z.B. ein vorübergehendes Parken eines FTF 20 in der zugehörigen Station 26 (Markierung 16-1 in Fig. 5), ein Laden eines Energiespeichers des FTF 20 in der zugehörigen Station 26, ein voll- oder teilautomatisiertes Beladen des FTF 20 mit einem Leerbehälter oder Ähnliches.

Das Terminal 70 ist vorzugsweise mit einer entsprechenden Benutzerschnittstelle versehen, über die die Bedienperson die entsprechenden Befehle in das Terminal 70 eingeben kann. Das Terminal 70 kommt also insbesondere in manuell bedienten Anlagen zum Einsatz, in welchen die FTF 20 den Materialfluss zwischen verschiedenen Stationen 26 implementieren. Die Bedienperson kann auf diese Weise bei Bedarf über das Terminal 70 leere FTF 20 zu ihrer Station 26 rufen und wartenden FTF 20 ein neues Fahrziel zuweisen. Die so programmierten FTF 20 finden ihren Weg selbstständig durch den Fahrkurs 12, ohne mit anderen FTF 20 zu kollidieren und ohne dass ein Leitrechner verwendet wird.

Das Terminal 70 kann freie FTF 20 aber nicht nur anfordern, sondern freien FTF auch lediglich ein neues Ziel oder eine Sequenz von Zielen (z.B. "fahre zur Station "5", übernehme dort einen Leebehälter und fahre danach zur Station "3") übermitteln.

## Patentansprüche

1. Fahrerloses Transportsystem, FTS, (10), das aufweist:
einen Fahrkurs (12), der aus Strecken (14), die jeweils durch eine Spur (28) definiert werden, und aus Markierungen (16) gebildet wird;
eine Flotte (18) aus mindestens zwei fahrerlosen Transportfahrzeugen, FTF, (20), die entlang der Spuren (28) zwangsgeführt fahren; und
mindestens eine Station (26), die definiert ist durch:
mindestens eine der Spuren (28),
mehrere der Markierungen (16) und
einen individualisierenden zugeordneten Stationsidentifikator;
wobei jede der Stationen (26) einen Bereich des Fahrkurses (12) darstellt, innerhalb dem die FTF (20) beladen, entladen, energetisch aufgeladen und/oder angehalten werden;
**dadurch gekennzeichnet, dass** die Markierungen (16) Verkehrskontrollmarkierungen (36) umfassen, die Informationen über Vorfahrtsregelungen im Bereich der jeweils zugeordneten Station umfassen, die stationsspezifisch sind, indem die jeweilige Information mit dem jeweils zugeordneten Stationsidentifikator verknüpft ist;
wobei jedes der FTF (20) aufweist:
eine Kommunikationseinheit (52) zum Senden und Empfangen der Informationen;
eine Markierungserfassungseinheit (54) zum Auslesen der Informationen aus den Verkehrskontrollmarkierungen; und
eine Steuereinheit (58) zum Verarbeiten der Informationen, die gelesen und empfangen werden; und
wobei eine Kommunikation der Informationen zwischen den FTF (20) untereinander direkt erfolgt.

2. Fahrerloses Transportsystem (10) nach Anspruch 1, wobei die Kommunikation zwischen den FTF (20) untereinander FTF-unspezifisch erfolgt.

3. Fahrerloses Transportsystem (10) nach einem der Ansprüche 1 oder 2, wobei die Steuereinheit (58) ferner eingerichtet ist:
eine Vorfahrtsregelung zwischen dem jeweiligen FTF (20) und einem anderen der FTF (20) nur zu veranlassen, wenn eine vom jeweiligen FTF (20) aus einer zuletzt ausgelesenen Markierung (16) umfasste Information mit einem der Stationsidentifikatoren verknüpft ist, der identisch zu einem Stationsidentifikator ist, den das jeweilige FTF (20) von dem anderen FTF (20) zuletzt empfangen hat.

4. Fahrerloses Transportsystem (10) nach einem der Ansprüche 1 bis 3, wobei
jede der Stationen (26) ferner ein Terminal (70) für eine Fahrzielvergabe aufweist,
jede der Stationen (26) einen Bereich des Fahrkurses (12) darstellt, innerhalb dem die FTF (20) ein neues Fahrziel zugewiesen bekommen,
eine Kommunikation zwischen den FTF (20) und den Terminals (70) direkt erfolgt, und
eine Vergabe des neuen Fahrziels zwischen dem jeweiligen FTF (20) und einem der Terminals nur zu veranlassen, wenn eine vom jeweiligen FTF (20) aus einer zuletzt ausgelesenen Markierung (16) umfasste Information mit einem der Stationsidentifikatoren verknüpft ist, der identisch zu einem Stationsidentifikator ist, den das jeweilige FTF (20) von dem einen der Terminals zuletzt empfangen hat.

5. Fahrerloses Transportsystem (10) nach einem der Ansprüche 1 bis 4, wobei
die Steuereinheit (58) ferner eingerichtet ist, wenn die zuletzt ausgelesene Markierung (16) eine der Verkehrskontrollmarkierungen (36) ist, eine Fortsetzung einer Fahrt des jeweiligen FTF ohne einen Stopp zu veranlassen, wenn die Information aus der zuletzt ausgelesenen Markierung ein Vorfahrthaben darstellt, und einen Stopp der Fahrt zu veranlassen, wenn die Information aus der zuletzt ausgelesenen Verkehrskontrollmarkierung (36) ein Vorfahrtachten darstellt und wenn eine Information von einem anderen der FTF empfangen wird, die ein Vorfahrthaben darstellt und die mit dem identischen Stationsidentifikator wie die Information aus der zuletzt ausgelesenen Verkehrskontrollmarkierung (36) verknüpft ist.

6. Fahrerloses Transportsystem (10) nach einem der Ansprüche 1 bis 5, wobei jedes der FTF (20) ferner einen Datenspeicher (56) aufweist, wo Verkehrskontrollregeln (62) dauerhaft hinterlegt sind, die für alle der FTF (20) gleich sind.

7. Fahrerloses Transportsystem (10) nach einem der Ansprüche 1 bis 6, wobei die Kommunikationseinheit (52) zur drahtlosen Kurzdistanz-Kommunikation mit einer Reichweite von 10 m bis 15 m innerhalb von Räumen eingerichtet ist.

8. Fahrerloses Transportsystem (10) nach einem der Ansprüche 1 bis 7, wobei die Markierungen (16) ferner stationsspezifische Navigationsmarkierungen (38) umfassen, die jeweils eine Information über einen nächsten stromabwärtsgelegenen Abzweigungspunkt (30) umfassen.

9. Fahrerloses Transportsystem (10) nach einem der Ansprüche 3 bis 8, wobei im Datenspeicher (56) ferner ein FTF-spezifisches Fahrziel überschreibbar hinterlegt ist und wobei eine Navigation durch den Fahrkurs (12) bis zum FTF-spezifischen Fahrziel vom jeweiligen FTF (20) allein geregelt wird, indem das FTF-spezifische Fahrziel basierend auf den Navigationsregeln (64) angefahren wird.

10. Fahrerloses Transportsystem (10) nach einem der Ansprüche 1 bis 9, wobei jedes der FTF (20) ferner aufweist:
eine Spurerfassungseinheit (60);
eine Lenkeinheit (46); und/oder
eine Fahreinheit (50), die eingerichtet, das FTF (20) entlang der Spuren (28) zu bewegen und das FTF (20) zu stoppen.

11. Fahrerloses Transportsystem (10) nach einem der Ansprüche 1 bis 10, das leitsteuerungsfrei ausgebildet ist.

12. Fahrerloses Transportsystem (10) nach einem der Ansprüche 1 bis 11, wobei die Markierungen (16) ferner Stationsmarkierungen (39) umfassen.

13. Fahrerloses Transportsystem (10) nach einem der Ansprüche 1 bis 12, wobei die Strecken (14) umfassen:
eine Hauptstrecke (22); und
mindestens eine Nebenstrecke (24).

14. Fahrerloses Transportsystem (10) nach Anspruch 13, wobei die Hauptstrecke (22) einen Rundkurs definiert.

15. Fahrerloses Transportsystem (10) nach Anspruch 13 oder 14, wobei die mindestens eine Nebenstrecke (24) eine Bucht (34) definiert, deren Spur (28) in einem Abzweigungspunkt (30) aus der Spur (28) der Hauptstrecke (22) abzweigt wird und deren Spur (28) in einem stromabwärtsgelegenen Zusammenführungspunkt (32) wieder mit der Spur (28) der Hauptstrecke (22) zusammengeführt wird.

## Claims

1. A driverless transport system, DTS, (10), comprising:
a travelling course (12) formed of routes (14), which are respectively defined by one track (28), and of markers (16);
a fleet (18) of at least two driverless transport vehicles, DTVs, (20) travelling along the tracks (28) in a forcibly guided manner; and
at least one station (26) defined by:
at least one of the tracks (28),
at least one of the markers (16), and
an individualizing assigned station identifier;
wherein each of the stations (26) represents an area of the travelling course (12) in which the DTVs (20) are loaded, unloaded, energetically charged, and/or stopped;
**characterized in that** the markers (16) include traffic-control markers (36) including information on regulation of right-of-way in the area of the respectively assigned station (26), which is station-specific **in that** the respective information is associated with the respectively assigned station identifier;
wherein each of the DTVs (20) comprises:
a communication unit (52) for transmitting and receiving the information;
a marker-detection unit (54) for reading the information from the traffic-control markers; and
a controlling unit (58) for processing the information read and received; and
wherein communication between the DTVs (20) is performed directly.

2. The driverless transport system (10) of claim 1, wherein the communication among the DTVs (20) is performed in a DTV-unspecific manner.

3. The driverless transport system (10) of claim 1 or 2, wherein the controlling unit (58) is further configured to:
cause regulation of right-of-way between the respective DTV (20) and another one of the DTVs (20) only if an information included in a marker (16) read last by the respective DTV (20) is associated with one of the station identifiers being identical to a station identifier which has been received last by the respective DTV (20) from the other DTV (20).

4. The driverless transport system (10) of any of claims 1 to 3, wherein
each of the stations (26) further comprises a terminal (70) for allocating a travelling destination,
each of the stations (26) represents an area of the travelling course (12) in which a new travelling destination is allocated to the DTVs (20);
communication between the DTVs (20) and the terminals (20) is performed directly, and
an allocation of a new travelling destination between the respective DTV (20) and one of the terminals is caused only if an information read last by the respective DTV (20) from a marker (16) is associated with one of the station identifiers being identical to a station identifier received last by the respective DTV (20) from the one of the terminals.

5. The driverless transport system (10) of any of claims 1 to 4, wherein
the controlling unit (58) is further configured, when the last-read marker (16) is one of the traffic-control markers (36), to cause continuation of travel of the respective DTV without any stop if the information from the last-read marker represents having right-of-way, and cause stop of the travel if the information from the last-read traffic-control marker (36) represents obeying right-of-way and if information is received from another one of the other DTVs representing having right-of-way and being associated with the identical station identifier as the information from the traffic-control marker (36) read last.

6. The driverless transport system (10) of any of claims 1 to 5, wherein each of the DTVs (20) further comprises a data storage (56), where traffic-control rules (62) are recorded permanently, which are the same for each of the DTVs (20).

7. The driverless transport system (10) of any of claims 1 to 6, wherein the communication unit (52) is configured for wireless short-distance communication in a range of 10 m to 15 m within rooms.

8. The driverless transport system (10) of any of claims 1 to 7, wherein the markers (16) further include station-specific navigation markers (38), which respectively include information on a branching-off point (30) located nearest in a downstream direction.

9. The driverless transport system (10) of any of claims 3 to 8, wherein in the data storage (56) a DTV-specific travelling destination is further recorded overwritable, and wherein navigation through the travelling course (12) to the DTV-specific travelling destination is controlled by the respective DTV (20) alone by travelling to the DTV-specific travelling destination based on the navigation rules (64).

10. The driverless transport system (10) of any of claims 1 to 9, wherein each of the DTVs (20) further comprises:
a track-detection unit (60);
a steering unit (46); and/or
a travelling unit (50) configured to move the DTV (20) along the tracks (28) and stop the DTV (20).

11. The driverless transport system (10) of any of claims 1 to 10, which is formed free of any master controller

12. The driverless transport system (10) of any of claims 1 to 11, wherein the markers (16) further comprise station markers (39).

13. The driverless transport system (10) of any of claims 1 to 12, wherein the routes (14) include:
a main route (22); and
at least one branch route (24).

14. The driverless transport system (10) of claim 13, wherein the main route (22) defines a round course.

15. The driverless transport system (10) of claim 13 or 14, wherein the at least one branch route (24) defines a bay (34), a track (28) of which is branched-off from the track (28) of the main route (22) in a branching-off point (30) and a track (28) of which is merged again, in a downstream merging point (32), with the track (28) of the main route (22).

## Revendications

1. Système de transport (10) sans conducteur, FTS, qui comprend :
un parcours de déplacement (12) formé de trajets (14), définis chacun par une voie (28), et de marquages (16) ;
une flotte (18) d'au moins deux véhicules de transport sans conducteur, FTF, (20), qui se déplacent de manière contrainte le long des voies (28) ; et
au moins une station (26), qui est définie par :
au moins une des voies (28),
plusieurs des marquages (16), et
un identificateur de station associé, réalisant une individualisation ;
chacune des stations (26) représentant une zone du parcours de déplacement (12) à l'intérieur duquel les FTF (20) sont chargés, déchargés, chargés en énergie et/ou arrêtés ;
**caractérisé en ce que** les marquages (16) comprennent des marquages (36) de contrôle de la circulation, qui contiennent des informations sur des règles de priorité de passage dans la zone de la station respectivement associée, qui sont spécifiques à la station, en ce sens que les informations respectives sont liées à l'identificateur de station respectivement associé ;
chacun des FTF (20) comprenant :
une unité de communication (52) pour l'émission et la réception des informations ;
une unité (54) de détection de marquage pour lire les informations provenant des marquages de contrôle de la circulation ; et
une unité de commande (58) pour traiter les informations qui sont lues et reçues ; et
une communication des informations étant effectuée entre les FTF (20), directement entre eux.

2. Système de transport (10) sans conducteur selon la revendication 1, dans lequel la communication entre les FTF (20) s'effectue entre eux de manière non spécifique aux FTF.

3. Système de transport (10) sans conducteur selon l'une des revendications 1 ou 2, dans lequel l'unité de commande (58) est en outre agencée :
pour ne déclencher une régulation de priorité entre le FTF (20) concerné et un autre des FTF (20) que si les informations comprise par le FTF (20) concerné à partir d'un marquage (16) qui a été lu en dernier sont liées à l'un des identifiants de station qui est identique à un identifiant de station que le FTF (20) concerné a reçu en dernier de l'autre FTF (20).

4. Système de transport (10) sans conducteur selon l'une des revendications 1 à 3, dans lequel
chacune des stations (26) comporte en outre un terminal (70) pour une attribution de destination,
chacune des stations (26) représente une zone du parcours (12) à l'intérieur de laquelle les FTF (20) se voient attribuer une nouvelle destination,
une communication entre les FTF (20) et les terminaux (70) est effectuée directement, et une attribution de la nouvelle destination entre le FTF (20) concerné et l'un des terminaux n'est déclenchée que si une information comprise par le FTF (20) concerné à partir d'un marquage (16) lu en dernier est associée à l'un des identificateurs de station qui est identique à un identificateur de station que le FTF (20) concerné a reçu en dernier de l'un des terminaux.

5. Système de transport (10) sans conducteur selon l'une des revendications 1 à 4, dans lequel
l'unité de commande (58) est en outre agencée, lorsque le dernier marquage (16) lu est l'un des marquages (36) de contrôle de la circulation, pour provoquer la poursuite d'un trajet du FTF respectif sans un arrêt, lorsque l'information provenant du dernier marquage lu représente une priorité de passage, et pour provoquer un arrêt du trajet lorsque l'information provenant du dernier marquage (36) de contrôle du circulation lu représente une priorité de passage et lorsqu'une information provenant d'un autre des FTF est reçue, qui représente une priorité de passage et qui est associée à l'identifiant de station identique à l'information provenant du dernier marquage (36) de contrôle de la circulation lu.

6. Système de transport (10) sans conducteur selon l'une des revendications 1 à 5, dans lequel chacun des FTF (20) comporte en outre une mémoire de données (56) dans laquelle sont stockées de manière permanente des règles de contrôle de la circulation (62) qui sont identiques pour tous les FTF (20).

7. Système de transport (10) sans conducteur selon l'une des revendications 1 à 6, dans lequel l'unité de communication (52) est conçue pour une communication sans fil à courte distance avec une portée de 10m à 15m à l'intérieur de locaux.

8. Système de transport (10) sans conducteur selon l'une des revendications 1 à 7, dans lequel les marquages (16) comprennent en outre des marquages de navigation (38) spécifiques à la station, chacun comprenant une information sur un point suivant (30) de bifurcation en aval.

9. Système de transport (10) sans conducteur selon l'une des revendications 3 à 8, dans lequel une destination spécifique au FTF est en outre enregistrée de manière réins-criptible dans la mémoire de données (56) et une navigation à travers le parcours de déplacement (12) jusqu'à la destination spécifique au FTF est régulée uniquement par le FTF (20) concerné, la destination spécifique au FTF étant abordée en se basant sur les règles de navigation (64).

10. Système de transport (10) sans conducteur selon l'une des revendications 1 à 9, dans lequel chacun des FTF (20) comprend en outre :
une unité (60) de détection de voie ;
une unité de direction (46) ; et/ou
une unité d'entraînement (50) qui est conçue pour déplacer le FTF (20) le long des voies (28) et pour arrêter le FTF (20).

11. Système de transport (10) sans conducteur selon l'une des revendications 1 à 10, qui est conçu de façon à être exempt de commande de guidage.

12. Système de transport (10) sans conducteur selon l'une des revendications 1 à 11, dans lequel les marquages (16) comprennent en outre des marquages de station (39).

13. Système de transport (10) sans conducteur selon l'une des revendications 1 à 12, dans lequel les trajets (14) comprennent :
une section principale (22) ; et
au moins un trajet secondaire (24).

14. Système de transport (10) sans conducteur selon la revendication 13, dans lequel le trajet principal (22) définit un circuit.

15. Système de transport (10) sans conducteur selon la revendication 13 ou 14, dans lequel ledit au moins un trajet secondaire (24) définit une bretelle (34) dont la voie (28) est bifurquée de la voie (28) du trajet principal (22) en un point de bifurcation (30) et dont la voie (28) est à nouveau réunie à la voie (28) du trajet principal (22) en un point de réunion aval (32).
